## Europäisches Patentamt
## European Patent Office
## Office européen des brevets

(11) Publication number: **0 244 185**
**B1**

(12) **EUROPEAN PATENT SPECIFICATION**

(45) Date of publication of patent specification: **06.02.91**

(51) Int. Cl.⁵: **F 16 K 41/10**

(21) Application number: **87303702.2**

(22) Date of filing: **27.04.87**

(54) Bellows valve.

(30) Priority: **28.04.86 US 856718**

(43) Date of publication of application:
**04.11.87 Bulletin 87/45**

(45) Publication of the grant of the patent:
**06.02.91 Bulletin 91/06**

(84) Designated Contracting States:
**AT BE DE FR IT NL SE**

(56) References cited:
**EP-A-0 202 883**
**FR-A-2 184 143**
**FR-E- 77 939**
**GB-A-2 135 025**
**US-A-2 628 638**
**US-A-4 201 366**

(73) Proprietor: **NUPRO COMPANY**
**4800 East 345 Street**
**Willoughby Ohio 44094 (US)**

(72) Inventor: **Danko, Oliver Laszlo**
**12184 Heath Road**
**Chesterland Ohio 44026 (US)**
Inventor: **Bork, Carl Richard, Jr.**
**22791 Harms Road**
**Euclid Ohio 44143 (US)**

(74) Representative: **Jones, Colin et al**
**W.P. THOMPSON & CO. Coopers Building**
**Church Street**
**Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to shutoff valves, and more particularly to bellows valves.

US-A-4 201 366 describes and illustrates an inverted bellows valve of the kind comprising a valve body having therein a fluid chamber and inlet and outlet passages in fluid communication with said chamber on opposite sides of a valve seat, an elongated valve stem having at a forward end a valve member operatively received in said chamber for co-operation with said seat to selectively control fluid flow between said inlet and outlet passages, said stem having a rearward end which extends outwardly from said chamber; a bellows disposed in said chamber in surrounding relation to a portion of said valve stem for isolating said stem from a system fluid in said chamber acting externally against said bellows, an actuator mounted on said valve body and operatively associated with said rearward end of said valve stem to effect reciprocating type movement of said stem between valve-open and valve-closed positions, and a sealing member sealingly engaging said valve body at an open end of said chamber and receiving said valve stem therethrough, said sealing member being sealingly connected to a rearward end of said bellows and having a shoulder thereon defining a limit stop for movement of the valve stem to the valve-open position.

Bellows valves are commonly employed in environments where sealing and cleanliness are of utmost importance. For example, bellows valves are used in the chemical industry to shut off flow of various system fluids and the like. Because of the caustic nature of many of these fluids, a more reliable sealing relationship between wetted components of the valve is always desirable.

In other industries, such as the semiconductor industry, it is desirable for the surrounding environment to remain as free of contaminants as possible to prevent introduction of imperfections into the final product. In the past, a suitable lubricant was necessarily placed between co-operating threaded components. The lubricant, although a requisite for valve assembly, can be considered a contaminant in such closely monitored applications as the semiconductor industry. Therefore, reduction and/or elimination of the lubricant is highly desirable from the standpoint of cleanliness.

In the valve of the above-mentioned US-A-4 201 366, the sealing member, to which the rearward end of the bellows is attached, is an adapter nut which is screwed into the body and the sealing engagement between the sealing member and the valve body is provided by means of a seal washer or gasket of a thermoplastic composition sold under the Trade Name KEL-F.

An object of the present invention is to provide a valve construction to meet the foregoing needs and solve the above-described problems and shortcomings associated with prior valve designs.

Another object of the invention is to provide an inverted bellows valve assembly which is particularly adapted for enhanced sealing between the valve components and for promoting cleanliness in the valve environment.

In accordance with the invention, a valve assembly of the above described kind is characterised in that the sealing engagement between the valve body and the sealing member is provided by a continuous annular bead extending axially outwardly from either said valve body or said sealing member for sealing engagement with a substantially planar surface on the other of said valve body and said sealing member, and a retaining member is retained on the valve body and acts on the sealing member to urge the annular bead sealingly against the planar surface.

A stem tip can be threadedly secured to the forward end of the valve stem, and means can be provided at the rearward end of the valve stem for retaining the stem in a desired orientation during replacement of the stem tip.

Preferably the retaining member, operatively engaging the valve body, retains a valve bonnet in abutting, sealing relation with the sealing member.

According to a preferred feature of the invention, strategically located tapered surfaces and spaced axial surfaces facilitate close alignment between the co-operating valve components.

An advantage of the present invention is found in enhanced sealing between the various valve components.

Yet another advantage of the invention resides in the operative cleanliness of the valve assembly.

An advantage of the preferred embodiments is realized in the accurate alignment achieved between the valve components.

The invention will be further described by way of example with reference to the accompanying drawings, wherein:

Fig. 1 is a vertical sectional view of a bellows valve constructed in accordance with the invention;

Fig. 2 is a vertical sectional view of an alternative bellows valve embodiment according to the invention;

Fig. 3 is an enlarged, detailed view of the encircled portion of Fig. 1;

Fig. 4A is a slightly enlarged, detailed view of a sealing member of the bellows valve according to the invention; and

Fig. 4B is a further enlarged cross-sectional view of the encircled portion of Fig. 4A.

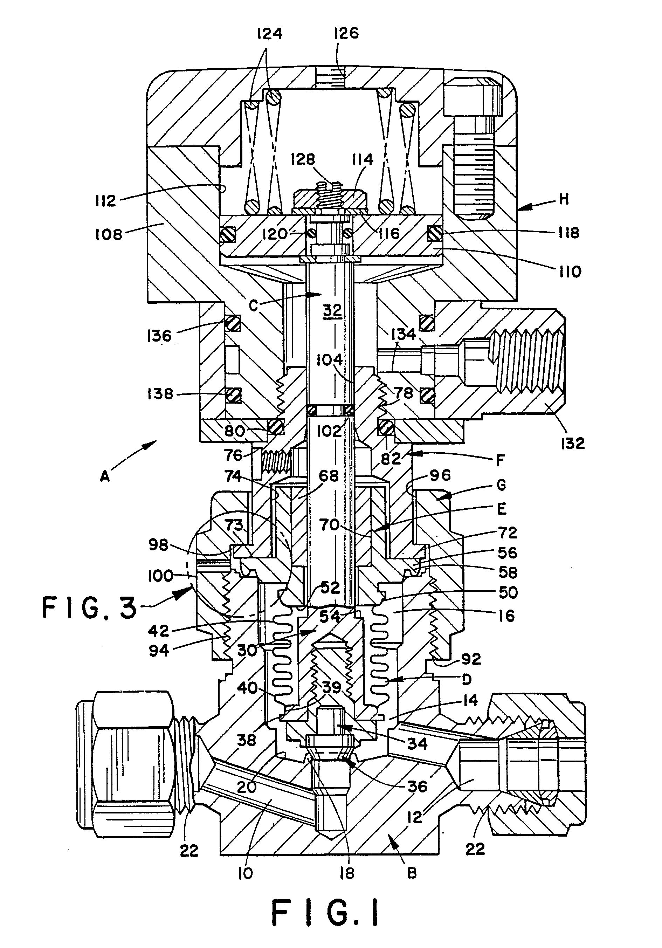

Referring now to the drawings, Fig. 1 shows an inverted bellows valve A which includes a valve body B operatively receiving valve stem C therein. A bellows D is sealingly secured at one end to the valve stem and at its other end to a sealing member E. A valve bonnet F extends outwardly from the valve body and is held thereon by a retaining member G. An actuator H is secured to an outer end of the valve stem and also connected to an outer portion of the valve bonnet.

More particularly, the valve body B has a first or inlet passage 10 and a second or outlet passage 12 in fluid communication with a valve chamber 14.

The valve chamber includes a first or open end 16 defined in an outer portion of the valve body and a valve seat 18 generally disposed around an inner, generally radially extending surface 20 of the valve chamber. As is known in the art, the inlet and outlet passages 10, 12 are adapted to receive fluid couplings or the like for integrating the valve into a fluid system. The externally threaded regions 22 provided at outer ends of the valve body branches which include the inlet and outlet passages 10, 12 are merely illustrative of one type of fluid coupling arrangement. Other suitable arrangements can be used with equal success.

The valve stem C includes a first or forward end 30 and a second or rearward end 32. The first end 30 of the valve stem is adapted for receipt in the valve chamber 14, specifically through open end 16 of the valve chamber. A stem tip sub-assembly 34 is threadedly received on the innermost portion of the first end 30 of the valve stem. The stem tip-sub-assembly 34 includes a press-fit tip insert 36 constructed of KEL-F (a Registered Trademark of Minnesota Mining and Manufacturing Co. of St. Paul, Minnesota, U.S.A.) adapted for sealing engagement with the valve seat 18. The tip insert 36 inhibits virtual leak from the thread area and drill point cavity of the stem tip sub-assembly 34 and inner end 30 of the valve stem. Other materials having properties comparable to those of the KEL-F material may be used with equal success.

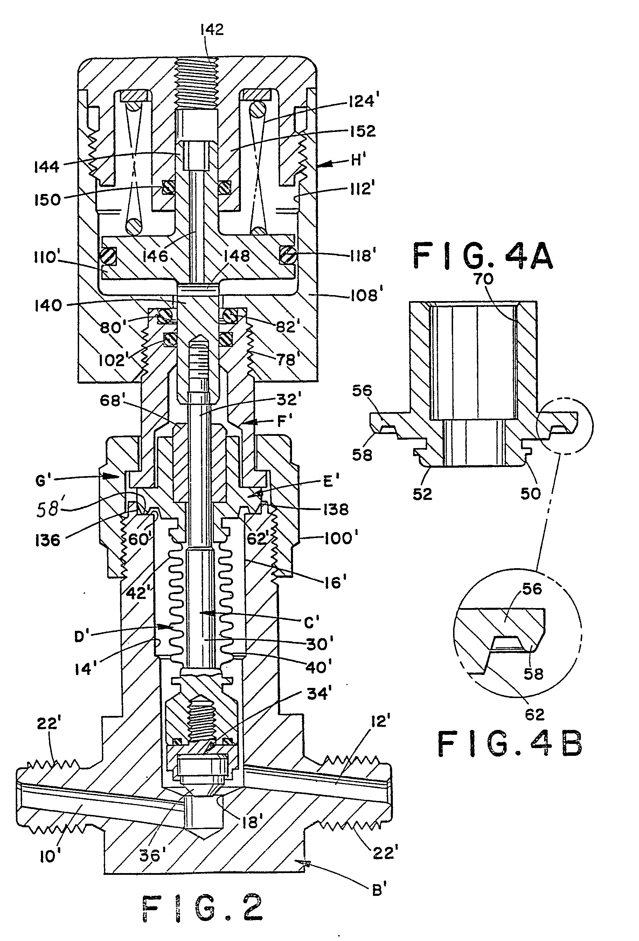

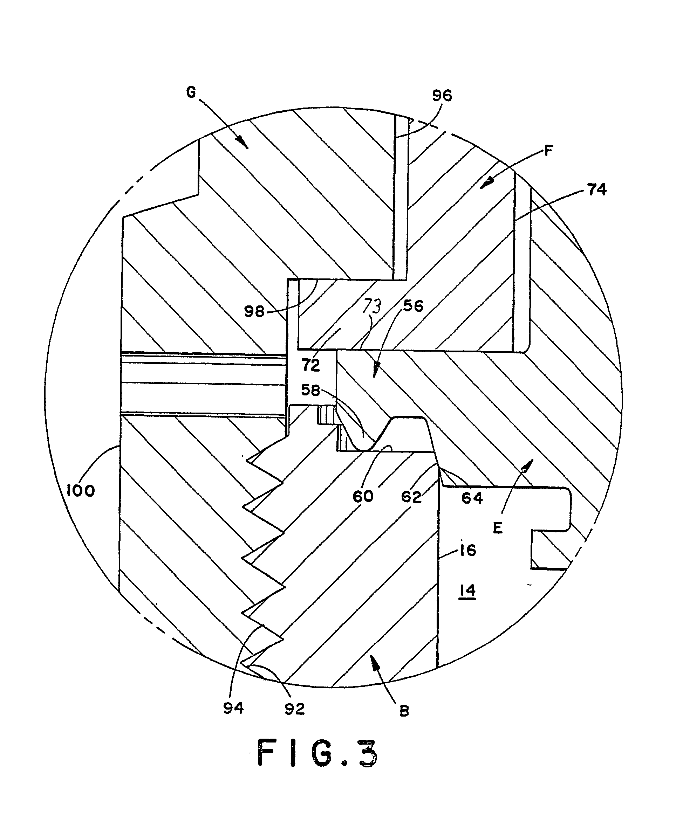

A radially-outwardly extending flange portion 38 of the first end 30 of the valve stem has an axially extending surface 39 adapted to be sealingly mated to a first end 40 of bellows D. The bellows D is constructed of stainless steel in the preferred embodiment and is pleated or folded as generally shown in Fig. 1 for enabling selective axial movement of the valve stem C relative to the valve seat 18. The first or forward end 40 of the bellows is welded or otherwise secured to the flange portion 38 while a second or rearward end 42 of the bellows D is sealingly secured by similar means to sealing member or weld ring E (Fig. 4A). The attachment of the bellows in this manner will cause it to be subjected to external compressive forces by fluid pressure in the valve chamber 14. Such arrangement is commonly referred to as an "inverted bellows" and is desirable because it can withstand greater external forces than internal forces. Thus, use of an inverted bellows allows the valve to be used at more extreme system pressures. Additionally, this bellows arrangement promotes longer life of the seal structure. As is known, the bellows functions to isolate the valve stem C from the system fluid in valve chamber 14.

Turning now to Figs. 3, 4A and 4B, and with continued reference to Fig. 1, the sealing member E has an annular shape adapted to receive valve stem B therethrough. An axially extending exterior surface section 50 is designed to closely receive thereon the second end 42 of the bellows. A radially extending face 52 extends inwardly from the surface 50 and defines a stop or limit means to prevent overtravel of the valve stem during axial reciprocation. The limit surface 52 is adapted to abuttingly engage a shoulder 54 on the valve stem to limit movement of the sealing stem C relative to the sealing member E. An enlarged diameter flange 56 is designed to overlie or close the open end 16 of the valve chamber 14. More particularly, the enlarged diameter flange 56 is adapted to sealingly engage the valve body B adjacent the open end 16 of the valve chamber 14.

The sealing engagement between flange 56 and the valve body B at open end 16 is provided through use of a bead seal arrangement (Fig. 3). Preferably, a continuous rounded or arcuate annular bead 58 is provided on the lower surface of the enlarged diameter flange 56. This bead is designed for mating engagement with a substantially planar shoulder 60 formed on the valve body B in circumferential surrounding relation to the open end 16 of the valve chamber. As will become more apparent, close engagement between the bead 58 and the planar shoulder 60 advantageously provides a fluid tight seal around the open end 16 of the valve chamber 14. Pressurized fluid is thereby confined in the valve chamber and leakage therefrom is prevented. The orientation of the bead seal can be reversed, i.e, by placing an annular bead on the valve body B and having an associated planar surface on the sealing member E, and such reversal falls within the scope of the invention.

Additionally, a tapered surface 62 on the sealing member E protrudes outwardly from the inner surface of the enlarged diameter flange 56 at an area thereof spaced radially inwardly from bead 58. Surface 62, in turn, tapers radially inwardly over its axial extent from the inner surface of the flange. The tapered surface 62 is designed to facilitate alignment between the sealing member E and the valve body B. This relationship promotes alignment between the valve stem C and the valve seat 18.

With particular reference to Fig. 3, the valve body B has a tapered surface 64 for co-operating relation with tapered surface 62 on the sealing member E. During valve assembly, these interfacing surfaces 62, 64 assure precise alignment between the closing member and the valve body. Further, there is a predetermined space or gap between the valve body B and the radially outer peripheries of the sealing bead 58 and enlarged diameter flange 56. This further assures that assembling alignment is achieved along tapered surfaces 62, 64.

With reference to Fig. 1, a bushing member 68 is received in an internal annular cavity 70 at the outer end of the sealing member E. In the preferred embodiment, this bushing member is constructed of bronze or like material and has an elongated axial dimension designed to support the valve stem C along a predetermined length thereof. The bushing member provides accurate stem guiding at an area remote from the system fluid to further promote cleanliness of the valve assembly.

As shown in Figs. 1 and 3, the valve bonnet F has a radially outwardly extending flange 72 at the inner end thereof which has a diameter closely approximating the peripheral dimension of the enlarged diameter flange 56. The radial flange 72 is adapted for mating engagement with an outwardly facing annular surface of the enlarged diameter flange 56 at an interface zone 73. In this manner, the closing member E is axially interposed between the valve bonnet F and the valve body B. Further, the valve bonnet has an axially extending inner wall surface 74 dimensioned to be radially spaced from the exterior surface of the sealing member E received therein. This radial clearance permits alignment between the various valve elements during assembly.

A bonnet sniffer tube (not shown) may be optionally employed to monitor the sealing integrity of the bellows and detect potential leakage of pressurized fluid into the valve bonnet cavity. A sniffer tube opening 76 (Fig. 1) extends radially through the sidewall of the valve bonnet F for receiving the sniffer tube in a conventional manner. The valve bonnet F further has a reduced diameter portion at the outer end thereof having an externally threaded region 78. This reduced diameter portion defines an external shoulder 80 adapted to receive a first seal member 82, such as an O-ring, between the valve bonnet F and an associated actuator housing 108.

Continuing with reference to Figs. 1 and 3, the bonnet nut or retaining member G is disposed in surrounding relationship with the valve bonnet F, the sealing member E and the valve body B. The bonnet nut G has an interior threaded portion 92 to matingly engage an exterior threaded region 94 on the valve body. An opening 96 receives the exterior surface of the valve bonnet F therethrough but has a dimension less than the diameter of the radial flange 72. Further, a radial shoulder 98 is defined in the interior of the bonnet nut G and is adapted to matingly engage the radial flange 72 of the valve bonnet F. Advancing the bonnet nut G relative to the valve body B at the area of conventional wrench flats 100 tightens the shoulder 98 into retaining engagement with the radial flange 72. The flange 72, in turn, exerts an axial compressive force on the enlarged diameter flange 56 of the sealing member E at interface 73. This, in turn, causes rounded bead 58 to be urged into an effective sealing relationship against the substantially planar shoulder 60 of the valve body (Fig. 3).

According to this arrangement, the axial compressive force of the bonnet nut G is transferred from shoulder 98, through flange 72, through enlarged diameter flange 56, and to the continuous sealing bead 58. Thus, even with incorporation of the radial spacing between the bonnet nut, valve bonnet, and sealing member, shoulder 98 is still axially aligned over the sealing bead 58. The force transfer through the noted valve components provides a reliable sealing relationship between the sealing bead 58 and planar shoulder 60 on the valve body B.

Use of the rounded bead as the seal means between the sealing member E and the valve body B permits the elimination of a gasket which has conventionally been disposed between these or similar abutting surfaces. The bead arrangement provides a more reliable seal and, additionally, requires less torque to tighten the bonnet nut G on the valve body B. Lower torque is an important feature since it permits the reduction or elimination of the need for lubrication on the bonnet nut threads. In high purity systems where cleanliness is of utmost importance, elimination or reduction of the lubricant is of vital significance.

A second seal member 102 is disposed between the valve stem C and an opening 104 in the upper portion of the valve bonnet F. The second seal member 102 is preferably an O-ring and designed to provide a dynamic seal around the valve stem C. In the Fig. 1 embodiment, the seal member 102 is received in a groove in the valve stem C, although a seal member-receiving groove could alternatively be formed in the valve bonnet F.

The actuator H is operatively disposed with the valve stem C for selectively imparting reciprocating movement thereto to open and close the valve A. Specifically, the actuator housing 108 is designed for mating engagement with the external threads 78 on the reduced diameter portion of the valve bonnet F. The actuator H is illustrated as a normally-closed operator in which a piston 110 defined in an actuator chamber 112 is spring biased to an inner or valve-closed position. As shown, the outer end 32 of the valve stem retainingly engages the piston 110 thereon by means of a nut 114 and washer 116. Other retaining arrangements may be utilized with equal success without departing from the scope of the invention. An outer seal member 118 is sealingly interposed between the outer periphery of the piston 110 and the actuator chamber 112, and an inner seal member 120 is interposed between the outer end 32 of the valve stem and the piston 110.

In the arrangement shown in Fig. 1, two concentric springs 124 extend between the outer region of the housing 108 and the piston 110 so that the valve stem C is normally biased towards its seated or valve-closed position. A threaded vent port 126 in the outer region of the actuator housing allows exhaust air to be piped away from the actuator chamber to some remote location, and this, too, promotes cleanliness of the valve A.

The vent port 126 provides an auxiliary function to the apparent use as an air vent. The port is of sufficient diameter to permit introduction of a tool, such as a screwdriver, into operative engagement with a slot or groove 128 formed in the outermost end portion of the valve stem C. Receipt of an associated tool (not shown) into slot 128 prevents the valve stem from rotating while the stem tip sub-assembly is replaced. Thus, maintenance and/or replacement is facilitated.

Actuator fluid pressure is supplied to the inner side of the piston 110 through a rotatable turret 132, similar to a banjo coupling. A radially extending opening 134 communicates between the rotatable turret and the actuator chamber 112 so that fluid pressure may be selectively supplied to the inner side of the piston 110. Sufficient pressure acts on the inner surface area of the piston to provide an opening force greater than the closing force of the two springs 124. Seal means 136, 138 may be provided between the actuator housing 108 and the rotatable turret 132. Selective control of fluid pressure to the inner side of the piston permits alternate opening and closing of the stem tip relative to the valve seat 18 in a manner known in the art.

The addition of the seal bead reduces or eliminates the need for lubrication between selected valve components. The seal bead, coupled with the vent port and elongated bushing at an area remote from the system fluid, promotes clean valve operation. Use of strategically located tapered surfaces and spaced clearances between the sealing member, valve bonnet, and bonnet nut enhance alignment between the valve components.

With reference to Fig. 2, a detailed description of an alternative inverted bellows embodiment designed for lower pressure ranges will be described. For ease of illustration, like elements are identified by like numerals with a primed (') suffix and new elements are identified by new numerals. Since a majority of the structural elements and functional characteristics of the alternative embodiment are similar to the embodiment of Fig. 1, the following detailed description will focus on those areas of significant structural and functional departure therefrom. Unless specifically noted otherwise, all like-numbered elements having a primed suffix operate substantially as described above.

In the arrangement of Fig. 2, a noticeable distinction resides in the alignment process between the valve body B' and the sealing member E'. The outer radial periphery 136 of the sealing bead 58' is designed for mating contact with the valve body B' along a generally axially extending surface 138 thereof. Contrary to the Fig. 1 embodiment where the outer periphery of the sealing bead defined a gap with the valve body, the alignment between the sealing member E' and the valve body B' in this alternative embodiment occurs along the sealing bead/valve body interface without any deleterious effect on the sealing function between the bead 58' and the planar surface 60'.

Further, the tapered surface 62' is spaced radially inwardly from the valve body. Thus, the alignment process occurs solely between the outer periphery 136 of the sealing bead and the surface 138 of the valve body. This defines a radially outer alignment process relative to the sealing bead while the above-described Fig. 1 embodiment defines a radially inner alignment process relative to the sealing bead. Since no alignment occurs along tapered surface 62', tapered surface 64 at the open end 16 of the valve chamber in Figs. 1 and 3 need not be formed in the alternative embodiment. The actuator housing 108' is threadedly secured to valve bonnet F' at threaded area 78'. A first seal member 82' is received on an interior shoulder 80' of the valve bonnet F'. The first seal member 82' compressingly engages the actuator housing 108' for sealing between the actuator H' and the valve bonnet F'.

The outer end 32' of the valve stem C' is retainingly connected to a stem extension portion 140 of the piston 110'. As shown, this interconnection comprises a threaded engagement between these members, although equivalent structure for achieving this connection may be used without departing from the scope of the invention. A second seal member 102' is compressingly held between the stem extension 140 and the valve bonnet F'. This dynamic seal assists in aligning the stem relative to the valve bonnet in addition to sealing the actuator chamber 112' in the housing. The piston 110' is sealingly received in the actuator chamber by means of an outer seal member 118' of the piston 110'. Since the Fig. 2 embodiment is utilized in lower pressure situations, only a single spring 124' is necessary to exert a biasing force and normally close the valve.

A fluid inlet port 142 is designed to permit fluid, such as air, to exert a pressure on the inner side of the piston 110'. In order to achieve this, a second stem extension 144 extends outwardly from the outer side of the piston 110', that is, in a direction generally opposite to that of the first stem extension 140. A passage 146 extends axially through the second stem extension and the piston into communication with a diametral cross flow passage 148 disposed adjacent the inner side of the piston. In this manner, fluid pressure may be selectively introduced to the inner side of the piston 110'. Fluid pressure may be fed to the actuator chamber for exerting an outwardly directed force against piston 110' to overcome the opposite biasing force of spring 124'. A dynamic seal member 150 is disposed between stem extension 144 and an axially extending cylindrical flange 152 of the actuator housing. Of course, the normally-closed valve arrangement illustrated in Fig. 2 may optionally be replaced with a normally-open or double acting arrangement as is known in the art.

## Claims

1. An inverted bellows valve comprising a valve body (B) having therein a fluid chamber (14) and inlet and outlet passages (10, 12) in fluid communication with said chamber (14) on opposite sides of a valve seat (18), an elongated valve stem (C) having at a forward end (30) a valve member (34) operatively received in said chamber (14) for co-operation with said seat (18) to selectively control fluid flow between said inlet and outlet passages (10, 12), said stem (C) having a rearward end (32) which extends outwardly from said chamber (14); a bellows (D) disposed in said chamber (14) in surrounding relation to a portion of said valve stem (C) for isolating said stem from a system fluid in said chamber (14) acting externally against said bellows; an actuator (H) mounted on said valve body (B) and operatively associated with said rearward end (32) of said valve stem (C) to effect reciprocating type movement of said stem between valve-open and valve-closed positions; and a sealing member (E) sealingly engaging said valve body (B) at an open end (16) of said chamber (14) and receiving said valve stem (C) therethrough, said sealing member (E) being sealingly connected to a rearward end (42) of said bellows (D) and having a shoulder thereon defining a limit stop (52) for movement of the valve stem (C) to the valve-open position; characterised in that said sealing engagement is provided by a continuous annular bead (58) extending axially outwardly from either said valve body (B) or said sealing member (E) for sealing engagement with a substantially planar surface (60) on the other of said valve body and said sealing member, and in that a retaining member (G) is retained on the valve body (B) and acts on the sealing member (E) to urge the annular bead (58) sealingly against the planar surface (60).

2. A bellows valve as claimed in claim 1, in which the limit stop (52) is isolated from the system fluid in the fluid chamber (14) by the bellows (D).

3. A bellows valve as claimed in claim 1 or 2, further comprising a valve bonnet (F) interposed between said valve body (B) and said actuator (H) and abuttingly engaging said sealing member (E).

4. A bellows valve as claimed in claim 3, in which said retaining member (G) retains said valve bonnet (F) in sealing engagement with said sealing member (E).

5. A bellows valve as claimed in claim 3 or 4, in which said sealing member (E) and said valve bonnet (F) have respectively, spaced axially extending surfaces (74) providing radial clearance facilitating alignment between said actuator (H) and said valve stem (C).

6. A bellows valve as claimed in claim 5, in which a seal member (102) is disposed between said valve bonnet (F) and said valve stem (C) adjacent said rearward end (32) thereof to align said actuator (H) with said valve bonnet (F) as said seal member (102) undergoes compression.

7. A bellows valve as claimed in any of claims 1 to 6, in which the valve stem (C) is slidably guided in the sealing member (E) at the side of the bellows (D) remote from the system fluid in the fluid chamber (14).

8. A bellows valve as claimed in claim 7, in which the sealing member (E) has an elongated bushing (68) closely receiving the valve stem (C) therethrough.

9. A bellows valve as claimed in any of claims 1 to 8, wherein either said valve body (B) or said sealing member (E) is provided with a tapering surface (62) co-operating with a surface (64) on the other of said valve body and said sealing member to facilitate substantially coaxial alignment therebetween.

10. A bellows valve as claimed in claim 9, wherein said surface (64) on the other of said valve body and said sealing member is also tapered.

11. A bellows valve as claimed in claim 9 or 10, wherein said tapering surface (62) is disposed radially inwardly from said annular bead (58).

12. A bellows valve as claimed in claim 9 or 10, wherein said tapering surface (136) is provided on said sealing member (E) and is on the outer periphery of said seal bead (58').

13. A bellows valve as claimed in any of claims 1 to 12, wherein said valve member (34) includes a stem tip (36) threadedly secured to said forward end (30) of said valve stem (C), whereby said stem tip is a replaceable sub-assembly.

14. A bellows valve as claimed in any of claims 1 to 13, wherein said actuator (H) has a housing (108) and a piston (110) received in an actuator chamber (112) in said housing, said piston (110) being operatively connected to said rearward end (32) of said valve stem (C).

15. A bellows valve as claimed in claim 14, wherein said piston is spring-biased either to a valve-open position or to a valve-closed position, said actuator having means (132) for supplying pressurized fluid to act against said spring biasing force and shift said piston to the other of said valve-open and valve-closed positions.

16. A bellows valve as claimed in claim 14 or 15, when appendant to claim 13, wherein said housing (108) has an opening (126) extending therethrough, said opening serving to receive an associated tool therethrough for holding said rearward end (32) of said valve stem during replacement of said stem tip (36).

17. A bellows valve as claimed in claim 14, 15 or 16, when dependent from claim 3, in which a seal member (82) is disposed between said valve bonnet (F) and said actuator housing (108) to seal said actuator with said valve bonnet as the seal member (82) is compressed.

**Patentansprüche**

1. Umgekehrtes Balgventil mit einem Ventilkörper (B), in dem eine Flüssigkeitskammer (14) vorgesehen ist und das mit der Kammer (14) auf gegenüberliegenden Seiten eines Ventilsitzes (18) in flüssiger Verbindung stehende Einlaß- und Auslaßdurchgänge (10, 12) aufweist, einem verlängerten Ventilschaft (C), der an einem vorderen Ende (30) ein in der Kammer (14) zum Zusammenwirken mit dem Sitz (18) betrieblich aufgenommenes Ventilglied (34) aufweist, um die Flüssigkeitsströmung zwischen den Einlaß- und Auslaßdurchgängen (10, 12) selektiv zu steuern, wobei der Schaft (C) ein hinteres Ende (32) aufweist, das sich aus der Kammer (14) erstreckt; einem in der Kammer (14) angeordneten Balg (D), der einen Teil des Ventilschaftes (C) zur Isolierung des Schaftes gegen eine sich in der Kammer (14) befindliche, von außen gegen den Balg wirkenden Systemflüssigkeit umgibt; einem Stellorgan (H), das an dem Ventilkörper (B) angebracht und betrieblich dem hinteren Ende (32) des Ventilschaftes (C) zugeordnet ist, um eine hin- und hergehende Bewegung des Schaftes zwischen den offenen und geschlossenen Stellungen des Ventils zu bewirken; und einem Abdichtungsglied (E), welches an einem offenen Ende (16) der Kammer (14) abdichtend mit dem Ventilkörper (B) in Eingriff steht und durch den der Ventilschaft (C) angebracht ist, wobei das Abdichtungsglied (E) abdichtend mit einem hinteren Ende (42) des Balgs (D) verbunden ist, welcher eine Schulter aufweist, die einen Begrenzungsanschlag (52) für die Bewegung des Ventilschaftes (C) in die offene Ventilstellung festlegt, dadurch gekennzeichnet, daß der abdichtende Eingriff durch einen kontinuierlichen ringförmigen Wulst vorgesehen ist, der sich axial nach außen entweder von dem Ventilkörper (B) oder dem Abdichtungsglied (E) heraus zum dichtenden Eingriff mit einer im wesentlichen ebenen Fläche (60) an dem Abdichtungsglied (2) bzw. dem Ventilkörper (B) erstreckt, und daß ein Halteelement (G) an dem Ventilkörper (B) gehalten ist und auf das Abdichtungsglied wirkt, um den ringförmigen Wulst (58) dichtend gegen die ebene Fläche (60) zu drücken.

2. Balgventil nach Anspruch 1, bei dem der Begrenzungsanschlag (52) gegenüber der Systemflüssigkeit der Flüssigkeitskammer (14) durch den Balg (D) isoliert ist.

3. Balgventil nach Anspruch 1 oder 2, der des weiteren einen Ventildeckel (F) umfaßt, der zwischen dem Ventilkörper (B) und dem Stellorgan (H) angeordnet ist und anstoßend gegen das Abdichtungsglied (E) mit diesem in Eingriff steht.

4. Balgventil nach Anspruch 3, bei dem das Halteelement (G) den Ventildeckel (F) in dichtendem Eingriff mit dem Abdichtungsglied (E) hält.

5. Balgventil nach Anspruch 3 oder 4, bei dem das Abdichtungsglied (E) und der Ventildeckel (F) jeweils sich axial mit einem Zwischenraum erstreckende Flächen (74) aufweisen, die ein radiales Spiel vorsehen, um eine Ausrichtung zwischen dem Stellorgan (H) und dem Ventilschaft (C) zu erleichtern.

6. Balgventil nach Anspruch 5, bei dem ein Abdichtungselement (102) zwischen dem Ventildeckel (F) und dem Ventilschaft (C) in der Nähe des hinteren Endes (32) angeordnet ist, um das Stellorgan (H) mit dem Ventildeckel (F) auszurichten, während das Abdichtungselement (102) einer Kompression ausgesetzt wird.

7. Balgventil nach einem der Ansprüche 1 bis 6, bei welchem der Ventilschaft (C) verschiebbar in dem Abdichtungsglied (E) an der Seite des Balgs (D) entfernt von der Systemflüssigkeit in der Flüssigkeitskammer (14) geführt wird.

8. Balgventil nach Anspruch 7, bei welchem das Abdichtungsglied (E) eine verlängerte Buchse (68) aufweist, durch die der Ventilschaft (C) eng angeordnet aufgenommen wird.

9. Balgventil nach einem der Ansprüche 1 bis 8, wobei entweder der Ventilkörper (B) oder das Abdichtungsglied (E) mit einer kegelförmigen Fläche (62) vorgesehen sind, die mit einer Fläche (64) an dem Abdichtungsglied bzw. dem Ventilkörper vorgesehen ist, um eine im wesentlichen koaxiale Ausrichtung zwischen diesen zu erleichtern.

10. Balgventil nach Anspruch 9, wobei die Fläche (64) an dem Ventilkörper bzw. dem Abdichtungsglied ebenfalls kegelförmig ausgebildet ist.

11. Balgventil nach Anspruch 9 oder 10, wobei die kegelförmige Fläche (62) radial nach innen bezüglich des ringförmigen Wulstes (58) angeordnet ist.

12. Balgventil nach Anspruch 9 oder 10, wobei die kegelförmige Fläche (136) an dem Abdichtungsglied (E) vorgesehen und am Außenumfang des Abdichtungswulstes (58') angeordnet ist.

13. Balgventil nach einem der Ansprüche 1 bis 12, wobei das Ventilglied (34) eine Schaftspitze (36) umfaßt, die über einem Gewinde an dem vorderen Ende des Ventilschaftes (C) befestigt ist, wobei die Schaftspitze eine austauschbare Unteranordnung bildet.

14. Balgventil nach einem der Ansprüche 1 bis 13, wobei das Stellorgan (H) ein Gehäuse (108) und einen in einer Stellorgankammer (112) in dem Gehäuse aufgenommenen Kolben (110) aufweist, welcher Kolben (110) betrieblich mit dem hinteren Ende (32) des Ventilschafts (C) verbunden ist.

15. Balgventil nach Anspruch 14, wobei der Kolben entweder in einer offenen Ventilstellung oder einer geschlossenen Ventilstellung durch eine Feder vorgespannt ist, wobei das Stellorgan Einrichtungen (132) zur Zuführung von einer unter Druck gesetzten Flüssigkeit aufweist, um gegen die Federvorspannungskraft zu wirken und den Kolben in der geschlossenen bzw. offenen Ventilstellung zu schieben.

16. Balgventil nach Anspruch 14 oder 15, sofern diese auf Anspruch 13 bezogen sind, bei dem das Gehäuse (108) eine sich durch dieses erstreckende Öffnung (126) aufweist, wobei die Öffnung zur Aufnahme durch diese ein zugeordnetes Werkzeug zum Halten des hinteren Endes (32) des Ventilschafts während des Austausches der Schaftspitze (36) dient.

17. Balgventil nach Anspruch 14, 15 oder 16, sofern diese auf Anspruch 3 zurückbezogen sind, bei dem ein Abdichtungselement (82) zwischen dem Ventildeckel (F) und dem Stellorgangehäuse (108) angeordnet ist, um das Stellorgan gegenüber dem Ventildeckel abzudichten, während das Abdichtungselement (82) komprimiert wird.

**Revendications**

1. Robinet à soufflet inversé comprenant un corps (B) ayant à l'intérieur une chambre à fluide (14) et des conduits d'entrée et de sortie (10, 12) communiquant avec cette chambre (14) situés de part et d'autre d'un siège (18), une tige allongée (C) ayant à une extrémité avant (30) un obturateur (34) situé dans la chambre (14) et coopérant avec le siège (18) pour commander l'écoulement de fluide entre les conduits d'entrée et de sortie (10, 12), cette tige (C) ayant une extrémité arrière (32) qui s'étend vers l'extérieur à partir de la chambre (14), un soufflet (D) placé dans la chambre (14) et entourant une partie de la tige (C) pour isoler celle-ci d'un fluide se trouvant dans la chambre (14) et agissant extérieurement sur le soufflet, un organe de commande (H) monté sur le corps (B) et associé à l'extrémité arrière (32) de la tige (C) pour produire un mouvement de va-et-vient de cette dernière entre des positions d'ouverture et de fermeture du robinet, et un élément d'étanchéité (E) en contact étanche avec le corps (B) à une extrémité ouverte (16) de la chambre (14) et traversé par la tige (C), cet élément d'étanchéité (E) étant joint de manière étanche à une extrémité arrière (42) du soufflet (D) et ayant un épaulement qui constitue une butée (52) limitant le mouvement de la tige (C) vers sa position d'ouverture du robinet, caractérisé par le fait que ledit contact étanche est produit par un bourrelet annulaire continu (58) s'étendant axialement vers l'extérieur à partir soit du corps (B), soit de l'élément d'étanchéité (E), et en contact étanche avec une surface sensiblement plane (60) de l'autre de ces éléments (B, E), et qu'un élément de retenue (G) est fixé au corps (B) et agit sur l'élément d'étanchéité (E) pour serrer le bourrelet annulaire (58) de manière étanche contre la surface plane (60).

2. Robinet à soufflet selon la revendication 1, dans lequel la butée de limitation de course (52) est isolée du fluide en circuit se trouvant dans la chambre à fluide (14) par le soufflet (D).

3. Robinet à soufflet selon l'une des revendications 1 et 2, comprenant en outre un chapeau (F) placé entre le corps (B) et l'organe de commande (H) et appuyé contre l'élément d'étanchéité (E).

4. Robinet à soufflet selon la revendication 3, dans lequel l'élément de retenue (G) maintient le chapeau (F) en contact étanche avec l'élément d'étanchéité (E).

5. Robinet à soufflet selon l'une des revendications 3 et 4, dans lequel l'élément d'étanchéité (E) et le chapeau (F) ont des surfaces s'étendant axialement espacées (74) qui créent un jeu radial qui facilite l'alignement entre l'organe de commande (H) et la tige (C).

6. Robinet à soufflet selon la revendication 5, dans lequel un joint (102) est placé entre le chapeau (F) et la tige (C) contre l'extrémité arrière (32) de celle-ci pour l'alignement de l'organe de commande (H) avec le chapeau (F) quand ce joint (102) subit une compression.

7. Robinet à soufflet selon l'une des revendications 1 à 6, dans lequel la tige (C) est guidée en coulissement dans l'élément d'étanchéité (E) sur le côté du soufflet (D) éloigné du fluide en circuit se trouvant dans la chambre à fluide (14).

8. Robinet à soufflet selon la revendication 7, dans lequel l'élément d'étanchéité (E) a un manchon allongé (68) qui est traversé étroitement par la tige (C).

9. Robinet à soufflet selon l'une des revendications 1 à 8, dont le corps (B) ou l'élément d'étanchéité (E) est pourvu d'une surface conique (62) qui coopère avec une surface (64) de l'autre de ces éléments (B, E) pour faciliter l'alignement sensiblement coaxial de ceux-ci.

10. Robinet à soufflet selon la revendication 9, dans lequel la surface (64) de l'autre desdits éléments (B, E) est elle aussi conique.

11. Robinet à soufflet selon l'une des revendications 9 et 10, dans lequel la surface conique (62) est située intérieurement radialement par rapport au bourrelet annulaire (58).

12. Robinet à soufflet selon l'une des revendications 9 et 10, dans lequel la surface conique (136) est prévue sur l'élément d'étanchéité (E') et est sur le pourtour extérieur du bourrelet d'étanchéité (58').

13. Robinet à soufflet selon l'une des revendications 1 à 12, dans lequel l'obturateur (34) comporte un bout rapporté (36) fixé par vissage à l'extrémité avant (30) de la tige (C) et constituant ainsi un bloc remplaçable.

14. Robinet à soufflet selon l'une des revendications 1 à 13, dont l'organe de commande (H) a un corps (108) et un piston (110) logé dans une chambre (112) dans ce corps, ce piston (110) étant joint à l'extrémité arrière (32) de la tige (C) du robinet.

15. Robinet à soufflet selon la revendication 14, dans lequel le piston est rappelé par ressort soit vers une position d'ouverture, soit vers une position de fermeture du robinet, l'organe de commande ayant un moyen (132) d'amenée d'un fluide sous pression destiné à agir contre la force de rappel produite par ressort et déplacer le piston vers l'autre desdites positions.

16. Robinet à soufflet selon l'une des revendications 14 et 15 quand celle-ci est jointe à la revendication 13, dans lequel la paroi du corps (108) de l'organe de commande est traversée par une ouverture (126) pour le passage d'un outil associé pour l'immobilisation de l'extrémité arrière (32) de la tige du robinet pendant le remplacement du bout rapporté (36).

17. Robinet à soufflet selon l'une des revendications 14, 15 et 16 quand celle-ci dépend de la revendication 3, dans lequel un joint (82) est placé entre le chapeau (F) et le corps (108) de l'organe de commande pour, lorsqu'il est comprimé, assurer l'étanchéité entre l'organe de commande et le chapeau.

F I G. 3

F I G. I

1

FIG. 2

FIG. 4A

FIG. 4B

2

FIG.3

3